# EUROPÄISCHE PATENTANMELDUNG

(11) **EP 0 720 925 A1**
(43) Veröffentlichungstag der Anmeldung: **10.07.1996**
(21) Anmeldenummer: 95120524.4
(22) Anmeldetag: 24.12.1995
(51) Int. Cl.: B60H 3/00, F24F 3/12

(54) **Luftauffrischer, insbesondere für Fahrzeuge**

(30) Priorität: 09.01.1995 CH 43/95
(71) Anmelder: Supair AG, CH-8152 Glattbrugg (CH)
(72) Erfinder: Guggenheim, Rudolf, CH-8032 Zürich (CH)
(74) Vertreter: Blum, Rudolf Emil Ernst

(57) **Zusammenfassung**

Der Luftauffrischer umfasst zwei Platten (1, 2), zwischen denen ein mit einem Parfum getränkter Duftgeber (3) angeordnet ist. Der Duftgeber (3) wird beabstandet von den beiden Platten (1, 2) gehalten. Eine der Platten (1) ist mit einer Haftschicht (5) versehen und kann zum Beispiel an der Windschutzscheibe (11) eines Fahrzeugs befestigt werden. In dieser Lage wird die Vorrichtung durch den Luftstrom (13) der Fahrzeugbelüftung optimal durchlüftet.

Die Vorrichtung ist einfach herzustellen und ermöglicht eine gute Belüftung des Duftgebers (3), ohne dass dieser direkt berührt werden kann.

## Beschreibung

Die Erfindung betrifft einen Luftauffrischer und ein Fahrzeug mit einem Luftauffrischer gemäss den Oberbegriffen der unabhängigen Ansprüche.

Luftauffrischer dieser Art sind in verschiedenster Ausführung bekannt. So gibt es zum Beispiel mit Duftstoff getränkte, poröse Körper, die an einer Schnur in einem Fahrzeug aufgehängt werden können. Diese sind jedoch für den Fahrzeuglenker irritierend, da sie beim Fahren hin und her pendeln. Ausserdem ist es möglich, dass der Benutzer in direkte Berührung mit dem mit Geruchsstoff getränkten Körper kommt.

Es gibt auch Luftauffrischer, bei denen der poröse Körper in einem Gehäuse untergebracht wird. Damit wird die Gefahr einer direkten Berührung des Duftgebers gebannt. Allerdings verschlechtert sich durch das Gehäuse der Luftaustausch. Ferner ist das Gehäuse oftmals konstruktiv aufwendig.

Deshalb stellt sich die Aufgabe, eine Vorrichtung der eingangs genannten Art bereitzustellen, die die Nachteile bekannter Lösungen mindestens teilweise vermeidet und trotzdem möglichst einfach in ihrem Aufbau ist. Des weiteren soll insbesondere auch ein Luftauffrischungssystem für ein Fahrzeug entworfen werden, dass den dort auftretenden speziellen Verhältnissen möglichst gut angepasst ist.

Diese Aufgaben werden durch die Gegenstände der unabhängigen Ansprüche gelöst.

Durch die Anordnung des Duftgebers zwischen zwei Platten wird eine sehr einfache Konstruktion bereitgestellt, die einerseits die Gefahr einer Berührung des Duftkörpers vermindert und andererseits eine gute Luftzirkulation gewährleistet. Eine besonders gute Luftzirkulation ist insbesondere dann gegeben, wenn der von den Platten seitlich begrenzte Raum in einem Kantenbereich offen ist bzw. geöffnet werden kann. Insbesondere Luftströme parallel zu den Platten können dann den Luftauffrischer optimal durchlüften.

Der Luftauffrischer eignet sich für verschiedenste Anwendungen. Bei einer Anwendung in einem Fahrzeug wird er oder eine ähnliche Vorrichtung vorzugsweise direkt an der Windschutzscheibe befestigt. In den meisten Fahrzeugen streicht die Luft der Innenseite der Windschutzscheibe entlang. Ein dort angeordneter Luftauffrischer wird durch die Luft somit dauernd und gut durchströmt. Besonders gut ist die Durchströmung, wenn der Duftgeber zwischen zwei beabstandeten Platten angeordnet ist, die parallel zur Windschutzscheibe liegen.

Vorzugsweise weist der Luftauffrischer an der Basisplatte einen abnehmbar klebenden, d.h. einen haftenden, Bereich auf, so dass er einfach an einer Unterlage und insbesondere an der Windschutzscheibe eines Fahrzeuges befestigt werden kann.

Besonders einfach wird die Konstruktion, wenn die Basisplatte und die Deckplatte mit Abstandshaltern ausgestattet sind, die den Duftgeber beidseitig abstützen. Vorzugsweise sind die Platten über mindestens ein geeignetes Verbindungsmittel miteinander verbunden, wobei sich das Verbindungsmittel durch Löcher erstreckt, die im Duftgeber vorgesehen sind. Damit wird ein seitliches Verrutschen des Duftgebers in einfacher Weise verhindert.

Vorzugsweise kann die Duftabgabe reguliert werden, indem der Abstand der Platten geändert wird.

Weitere Vorzüge und Anwendungen der Erfindung ergeben sich aus der nun folgenden Beschreibung eines Ausführungsbeispiels anhand der Figuren. Dabei zeigen:
Figur 1 eine schematische Ansicht einer ersten Ausführung des erfindungsgemässen Luftauffrischers,
Figur 2 und 3 eine Seitenansicht und eine Draufsicht der Basisplatte mit dem gestrichelt eingezeichneten Körper des Duftgebers,
Figur 4 und 5 eine Seitenansicht und eine Draufsicht der Deckplatte,
Figur 6 eine Seitenansicht der fertig montierten Vorrichtung an der Windschutzscheibe eines Fahrzeugs,
Figur 7 eine zweite Ausführung eines erfindungsgemässen Luftauffrischers,
Figur 8 eine Seitenansicht des Luftauffrischers von Fig. 7 mit gestrichelter Darstellung einiger nicht sichtbarer Teile,
Figur 9 eine Seitenansicht des Luftauffrischers von Fig. 7 in geschlossener Stellung, und
Figur 10 eine dritte Ausführung eines erfindungsgemässen Luftauffrischers.

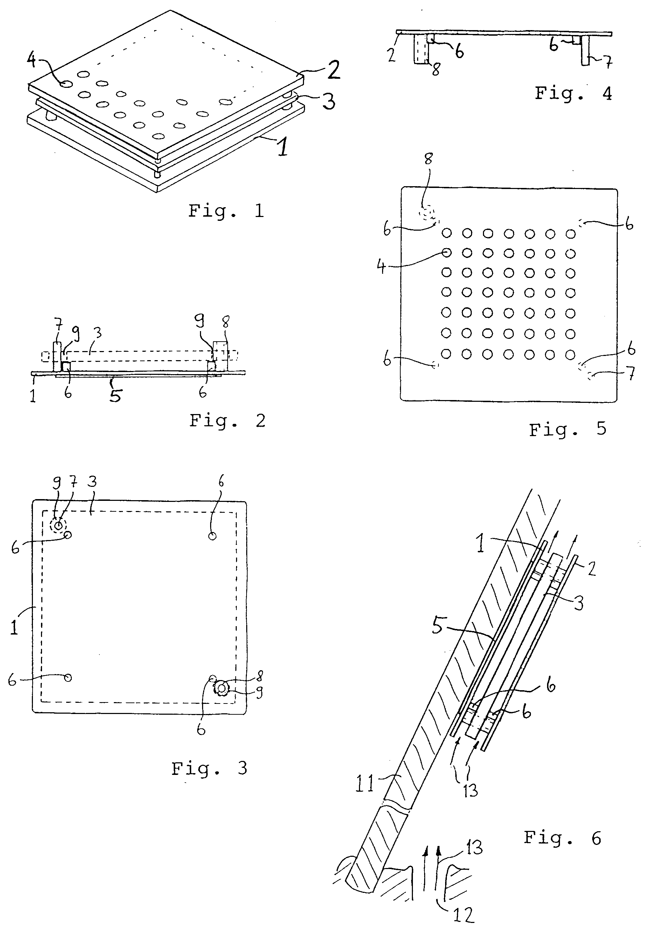

Der Grundaufbau einer einfachsten Ausführung des Luftauffrischers ist in Figur 1 illustriert. Die Vorrichtung umfasst eine Grundplatte 1 und eine Deckplatte 2, zwischen denen der Duftgeber 3 angeordnet ist. Die Grundplatte 1 und die Deckplatte 2 sind vorzugsweise Platten aus Kunststoff, z. B. Polypropylen. Der Duftgeber ist ein poröser Körper, der mit einem Parfum getränkt ist, vorzugsweise ein Filz aus Viskose getränkt mit ätherischem Oel.

Der durch die beiden ebenen Platten 1 und 2 seitlich eingeschlossene Zwischenraum ist an seinen Kanten offen, so dass ein Luftdurchtritt parallel zu den Platten 1, 2 gewährleistet ist. In der Deckplatte 2 sind zur weiteren Verbesserung der Durchlüftung Löcher 4 vorgesehen, von denen in Figur 1 nur einige wenige gezeigt werden.

Der Duftgeber 3 ist plattenförmig ausgeführt und wird zwischen den beiden Platten 1, 2 beabstandet gehalten.

Der Aufbau der Grundplatte 1 ergibt sich aus Fig. 2 und 3. Sie umfasst einen quadratischen Plattenkörper mit einer Kantenlänge von z. B. 68 mm und einer Dicke von 0.3 - 1.0 mm. Selbstverständlich kann die Platte zum Beispiel auch rechteckig oder rund ausgeführt sein. Der Plattenkörper ist flexibel, so dass er sich einer leicht gekrümmten Unterlage anpassen kann.

Zur Befestigung der Vorrichtung an der Unterlage ist an der Aussenseite der Grundplatte 1 ein doppelseitiger Klebefilm 5 vorgesehen. Die die Grundplatte 1 berührende Seite des Klebefilms 5 ist mit einem starken, nicht lösbaren Kleber und die andere Seite mit einem lösbaren Haftkleber versehen. Der Haftkleber erlaubt es, die Vorrichtung auf einer Unterlage haftend, aber abnehmbar zu befestigen.

Der Klebefilm 5 ist transparent ausgeführt. Dies hat den Vorteil, dass die spektrale Absorption vom Gehäuse gegeben wird. Wird die Vorrichtung von innen auf eine Windschutzscheibe geklebt, so wird also ihre Erwärmung aufgrund der Sonneneinstrahlung nur durch die spektrale Absorption des Gehäuses gegeben - damit kann durch die Wahl des Gehäusematerials bestimmt werden, wie stark sich die Vorrichtung bei Sonneneinstrahlung erwärmen kann, womit die temperaturabhängige Abgabegeschwindigkeit des Duftstoffs steuerbar ist.

Der Duftgeber 3 ist als quadratische Filzplatte ausgeführt. Seine Seitenlänge ist etwas kleiner als jene der Grundplatte 1, so dass er seitlich etwas zurückversetzt ist.

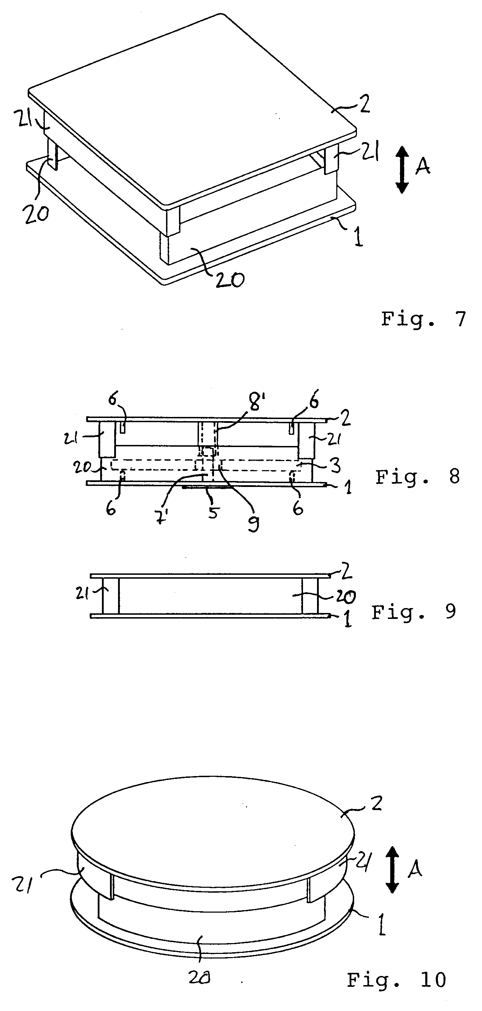

Die Deckplatte 2 ist, wie aus Fig. 4 und 5 ersichtlich, gleich aufgebaut wie die Grundplatte 1. Sie ist jedoch mit den oben erwähnten Löchern 4 zur Verbesserung der Luftzirkulation versehen.

Wie sich aus den Figuren 2 bis 6 ergibt, sind die Grundplatte 1 und die Deckplatte 2 über Stifte 7 und Röhrchen 8 miteinander verbunden. Dabei ist je ein Stift 7 und je ein Röhrchen 8 auf jeder Platte befestigt und jeder Stift 7 greift in ein gegenüber liegendes Röhrchen 8 der anderen Platte ein. Die Stifte 7 und Röhrchen 8 können miteinander verkeilt, verklebt oder verschweisst sein oder mit einem geeigneten Einrastmechanismus versehen werden.

Der Abstand zwischen den Platten 1,2 beträgt etwa 8 mm. Somit ist der Plattenabstand wesentlich kleiner als die Plattenkantenlänge.

Zur Positionierung des Duftgebers 3 sind ferner an jeder Platte 1, 2 vier kürzere Stifte 6 von etwa 2.5 mm Höhe angeordnet. Diese stützen als Abstandshalter den Duftgeber, wie in Fig. 6 gezeigt, beidseitig punktuell ab. Damit wird ein Luftspalt zwischen jeder Platte 1, 2 und dem Duftgeber 3 sichergestellt, was eine gute Luftzirkulation gewährleistet.

Wie insbesondere aus den Figuren 2 und 3 ersichtlich wird, treten die Röhrchen 8 durch zwei Oeffnungen 9 im Duftgeber 3. Damit wird ein Verschieben des Duftgebers 3 verhindert.

Die Herstellung der Vorrichtung ist einfach. Zuerst wird der Duftgeber 3 mit seinen Löchern 9 über den Stift 7 bzw. das Röhrchen 8 der Basisplatte 1 gelegt, so dass er auf den kurzen Stiften 6 aufliegt. Sodann wird die Deckplatte 2 aufgebracht, so dass deren kurze Stifte 6 den Duftgeber 3 ebenfalls berühren. Dann wird die Deckplatte 2 mit der Grundplatte 1 über die Stifte 7 und Röhrchen 8 fest verbunden.

Figur 6 illustriert eine bevorzugte Anordnung eines Luftauffrischers in einem Fahrzeug. Der Luftauffrischer wird hierbei mit der haftenden Schicht 5 auf die Windschutzscheibe 11 geklebt. In der in Figur 6 gezeigten Vorrichtung liegen dabei die beiden Platten 1, 2 parallel zur Windschutzscheibe 11. Diese Anordnung ist besonders vorteilhaft, da die meisten Fahrzeuge über Schlitze 12 am unteren Ende der Windschutzscheibe 11 belüftet werden. Die so eingeführte Luft 13 läuft der Windschutzscheibe 11 entlang, tritt seitlich in den Auffrischer ein und durchläuft diesen. Damit wird der Auffrischer optimal und gleichmässig durchlüftet.

Die Figuren 7 - 9 zeigen die zur Zeit bevorzugte Ausführung des Luftauffrischers. Im Gegensatz zur Ausführung nach Fig. 1 ist hier der Abstand zwischen Grundplatte 1 und Deckplatte 2 verstellbar, um eine Regulierung der Duftabgabe zu ermöglichen. Zu diesem Zweck sind an den Platten 1, 2 je zwei Seitenwände 20 bzw. 21 angeordnet. Jede Seitenwand erstreckt sich entlang einer Seitenkante und ist an Ihren Enden um 90° abgewinkelt. Die Seitenwände sind so angeordnet und dimensioniert, dass die Seitenwände 21 der Deckplatte 2 mit ihren abgewinkelten Enden die Enden der Seitenwände 20 der Basisplatte umgreifen, so dass die Seitenwände eine relative Verdrehung der Platten 1,2 verhindern.

In der Mitte des Luftauffrischers ist ein Stift 7' angeordnet, der in ein Röhrchen 8' eingreift. Der Stift 7' ist mit der Grundplatte 1, das Röhrchen 8' mit der Deckplatte 2 verbunden. Der Stift 7' ist achsial im Röhrchen 8' verschiebbar.

Zur Regulierung der Duftabgabe kann der Luftauffrischer durch Auseinanderziehen bzw. Zusammenstossen der Deck- und Grundplatten entlang Pfeil A stufenlos geöffnet bzw. geschlossen werden. In Figur 7 und 8 wird der Luftauffrischer in ganz geöffnetem Zustand gezeigt. Hier haben die Platten 1,2 grösstmöglichen Abstand und die Seitenkanten des Duftauffrischers sind offen. In Figur 9 wird der Duftauffrischer in geschlossenem Zustand gezeigt. Die Seitenwände 20 der Grundplatte 1 berühren die Deckplatte 2, die Seitenwände 21 der Deckplatte 2 die Grundplatte 1. Somit ist der Luftauffrischer allseitig geschlossen und die Duftabgabe minimal.

In der Ausführung nach den Figuren 7 - 9 wird der Duftgeber 3 wie in Fig. 1 mittels insgesamt acht kurzen Stiften 6 beabstandet von den Platten 1,2 gehalten. Je vier dieser Stifte sind an der Grundplatte, je vier an der Deckplatte befestigt. Die Länge der Stifte 6, die Dicke des Duftgebers 3 und die Höhe der Seitenwände 20, 21 sind so aufeinander abgestimmt, dass im geschlossenen Zustand (Fig. 9) der Duftgeber 3 beidseitig von den Stiften 7 beaufschlagt wird. Wird der Luftauffrischer geöffnet, so werden die Stifte 6 vom Duftgeber 3 abgehoben. Die Stifte verhindern jedoch immer noch, dass der Duftgeber 3 eine der Platten 1,2 berührt.

In der Mitte des Duftgebers 3 ist ein Loch 9 vorgesehen, durch welches sich das Röhrchen 8' bzw. der Stift 7' erstreckt.

Figur 10 zeigt eine Ausführung des Luftauffrischers, welche in ihrem Grundaufbau jener von Fig. 7 entspricht. Auch hier können die Grundplatte 1 und die Deckplatte 2 mehr oder weniger auseinandergezogen werden, so dass die Seitenwände 20, 21 die Seitenkanten mehr oder weniger freigeben. Im Gegensatz zur Ausführung nach Fig. 7 ist der hier gezeigte Duftauffrischer jedoch nicht quadratisch, sondern rund aufgebaut.

## Patentansprüche

1. Luftauffrischer mit einem Duftgeber (3) und einem Befestigungsmittel (5), gekennzeichnet durch eine im wesentlichen ebene Basisplatte (1) und eine parallel und beabstandet von der Basisplatte (1) angeordnete, im wesentlichen ebene Deckplatte (2), wobei der Duftgeber (3) zwischen der Basisplatte (1) und der Deckplatte (2) angeordnet ist und wobei das Befestigungsmittel (5) an der Basisplatte (1) angeordnet ist.

2. Luftauffrischer nach Anspruch 1, dadurch gekennzeichnet, dass der von der Basisplatte (1) und der Deckplatte (2) seitlich begrenzte Raum in einem Kantenbereich zur Luftzirkulation zwischen der Basisplatte (1) und der Deckplatte (2) offen oder öffenbar ist.

3. Luftauffrischer nach einem der vorangehenden Ansprüche, dadurch gekennzeichnet, dass der Duftgeber (3) plattenförmig ist und unter minimalem Abstand von Basisplatte (1) und Deckplatte (2) gehaltert ist.

4. Luftauffrischer nach Anspruch 3, dadurch gekennzeichnet, dass sowohl an der Basisplatte (1) als auch an der Deckplatte (2) stiftförmige Abstandshalter (6) angeordnet sind.

5. Luftauffrischer nach einem der vorangehenden Ansprüche, gekennzeichnet durch mindestens ein Verbindungsmittel (7,7',8,8'), welches sich stabförmig zwischen der Deckplatte (2) und der Basisplatte (1) und durch ein Loch (9) im Duftgeber erstreckt.

6. Luftauffrischer nach einem der vorangehenden Ansprüche, dadurch gekennzeichnet, dass das Befestigungsmittel (5) einen lösbar klebbaren Bereich umfasst.

7. Luftauffrischer nach einem der vorangehenden Ansprüche, dadurch gekennzeichnet, dass das Befestigungsmittel (5) transparent ist.

8. Luftauffrischer nach einem der vorangehenden Ansprüche, dadurch gekennzeichnet, dass die Basisplatte (1) flexibel ist.

9. Luftauffrischer nach einem der vorangehenden Ansprüche, dadurch gekennzeichnet, dass zur Regelung der Duftabgabe der Abstand zwischen der Basisplatte (1) und der Deckplatte (2) änderbar ist.

10. Luftauffrischer nach Anspruch 9, dadurch gekennzeichnet, dass an der Basisplatte (1) und/oder der Deckplatte (2) mindestens ein Seitenwandstück (20, 21) angeordnet ist, wobei der bzw. die Seitenwandstücke in einem geschlossenen Zustand des Luftauffrischers den Kantenbereich zwischen Basis- und Deckplatte rundum schliessen.

11. Luftauffrischer nach Anspruch 10, dadurch gekennzeichnet, dass sowohl an der Grund- als auch an der Deckplatte, versetzt zueinander Seitenwandstücke vorgesehen sind, wobei sich Endbereiche der Seitenwandstücke (20) der Grundplatte (1) mit Endbereichen benachbarter Seitenwandstücke (21) der Deckplatte (2) überlappen.

12. Luftauffrischer nach Anspruch 11, dadurch gekennzeichnet, dass jedes Seitenwandstück gerade verläuft und in den Endbereichen abgewinkelt ist.

13. Fahrzeug mit einem Luftauffrischer, insbesondere nach einem der vorangehenden Ansprüche, und mit einer Windschutzscheibe (11), dadurch gekennzeichnet, dass der Luftauffrischer (1, 2, 3) direkt an der Windschutzscheibe (11) befestigt ist.

14. Fahrzeug nach Anspruch 13, dadurch gekennzeichnet, dass die Basisplatte (1) des Luftauffrischers abnehmbar auf der Windschutzscheibe (11) haftet.
